# EUROPÄISCHE PATENTANMELDUNG

(11) **EP 0 572 101 A1**
(43) Veröffentlichungstag der Anmeldung: **01.12.1993**
(21) Anmeldenummer: 93250145.5
(22) Anmeldetag: 19.05.1993
(51) Int. Cl.: G03B 17/18, H04N 5/232

(54) **Bedienelement für Kameras mit akustischer Signalisierung**

(30) Priorität: 26.05.1992 DE 4217678
(71) Anmelder: ARNOLD & RICHTER CINE TECHNIK GMBH & CO. BETRIEBS KG., D-80701 München (DE)
(72) Erfinder: Koppetz, Michael, 81669 München (DE)
(74) Vertreter: Ninnemann, Detlef, Dipl.-Ing.

(57) **Zusammenfassung**

Die Erfindung betrifft ein Bedienelement 1 für Kameras zur Einstellung photographischer Parameter mit einem Verstellelement 2. Erfindungsgemäß sind in das Bedienelement 1 eine Eckwerteingabe 5 zur Eingabe von Eckwerten einer Verstellung und ein Tonerzeugungselement 12 integriert, wobei das Tonerzeugungselement 12 in Abhängigkeit von der Differenz zwischen dem aktuellen Einstellwert des Verstellelementes 2 und den eingestellten Eckwerten ein elektrisches Signal erzeugt, das einem elektroakustischen Wandler 9 zugeführt wird. Ziel der Erfindung ist es, ein Bedienelement 1 für Kameras zu Verfügung zu stellen, welches dem Anwender ermöglicht, sich bei der Bedienung des Bedienelementes 1 auf das photographische Geschehen zu konzentrieren und dabei die Einstellung eines photographischen Parameters an Änderungen im Geschehen dynamisch anpassen zu können.

## Beschreibung

Die Erfindung betrifft ein Bedienelement für Kameras zur Verstellung photographischer Parameter nach dem Oberbegriff des Anspruchs 1.

Bei einer Laufbildkamera werden während der Aufnahme eine Vielzahl photographischer Parametern variiert, insbesondere die Aufnahmefrequenz, die Sektorenblendenöffnung, die Irisblendenöffnung, die Schärfe und die Brennweite.

Zur einfacheren und zuverlässigeren Variation dieser Parameter werden bevorzugt Bedienelemente verwendet, die entweder an der Kamera selber angebracht oder als Fernbedienungen realisiert sind. Die bekannten Bedienelemente lassen sich dabei in analoge und programmierbare Bedienelemente einteilen.

Analoge Bedienelemente weisen zur Einstellung eines photographischen Parameters meist ein skaliertes Verstellrad mit mechanisch justierbaren Anschlägen auf. Mittels der justierbaren Anschläge und/oder durch eigene Markierungen auf den Skalenscheiben kann der Anwender bestimmte Eckwerte seiner Verstellung einstellen.

Bei programmierbaren Bedienelementen werden Verstellverläufe eines oder mehrerer Parameter vorprogrammiert oder durch Abspeichern analoger Verstellverläufe aufgezeichnet und die vorprogrammierten oder aufgezeichneten Verstellverläufe für einen Wiedergabeablauf an die Kamera übertragen. Es können dazu beispielsweise die Eckwerte der Veränderung eines Parameters und die Geschwindigkeit, mit der die Veränderung erfolgen soll, digital vorgegeben werden.

Bei der Aufnahme muß die Verstellung der Parameter oft höchstgenau auf das zu filmende Geschehen abgestimmt sein. Es ist daher erforderlich, daß der Kameramann bzw. sein Assistent das Geschehen visuell verfolgt. Bei Verwendung eines skalierten Verstellrades muß der Anwender nachteilig abwechselnd auf Skala und Motiv sehen, um den Ablauf des Geschehens abzustimmen.

Auch ist das genaue Anfahren von auf Skalenscheiben markierten Einstellwerten auf Grund der natürlichen Unschärfe der Markierungen nur schwer zu realisieren. Bei der Verwendung mechanischer Anschläge ist die Genauigkeit der Einstellung gesichert, jedoch muß der Anwender das Anfahren der Anschläge visuell kontrollieren, um harte Übergänge zu vermeiden. Weiter erlauben die mechanische Anschläge keine dynamische Anpassung an zufällige oder spontan vorgenommene Änderungen im Geschehen, da die vorgegebenen Werte nicht mehr zu korrigieren sind.

Programmierte oder aufgezeichnete Verstellungen der zu verändernden Parameter vermeiden die obengenannten Probleme, setzen jedoch nachteilig ein präzise wiederholbares Geschehen voraus, da der zeitliche Ablauf fest vorgegeben ist. Daher sind dynamische Anpassungen an Änderungen im Geschehen nicht möglich.

Der Erfindung liegt die Aufgabe zu Grunde, ein Bedienelement für Kameras zur Einstellung photographischer Parameter der eingangs genannten Gattung zur Verfügung zu stellen, welches dem Anwender ermöglicht, sich bei der Bedienung des Bedienelementes auf das photographische Geschehen zu konzentrieren und dabei die Einstellung eines photographischen Parameters an Änderungen im Geschehen dynamisch anpassen zu können.

Diese Aufgabe wird erfindungsgemäß durch die kennzeichnenden Merkmale des Anspruchs 1 erfüllt.

Die erfindungsgemäße Lösung ermöglicht durch Erzeugung eines akustischen Signals, welches von der Differenz zwischen dem aktuellen Einstellwert und den eingestellten Eckwerten abhängt, das Verstellen eines Parameters zwischen den Eckwerten, ohne daß der Anwender auf das Bedienelement sehen muß. Dadurch kann er sich vollständig auf das zu filmende Geschehen konzentrieren.

Eingestelle Eckwerte können bewußt und ohne hinzusehen über- oder unterfahren werden, um dynamisch auftretende Veränderungen im Geschehen zu berücksichtigen. Das Maß des Über- oder Unterfahrens eines Eckwertes ist dabei akustisch kontrollierbar. Der zeitliche Ablauf bei der Verstellung eines Parameters ist in keiner Weise vorgegeben und vom Anwender unter Berücksichtigung des zu filmenden Geschehens frei bestimmbar.

In einer bevorzugten Ausführungsform der Erfindung ist das vom Tonerzeugungselement erzeugte elektrische Signal mit einer Frequenz getaktet, die mit zunehmender Übereinstimmung zwischen dem aktuellen Einstellwert und dem dieser Einstellung nächsten Eckwert abnimmt. Auf diese Weise wird in dem mit dem Bedienelement verbundenen elektroakustischen Wandler ein getakteter Ton erzeugt, dessen Takt umso langsamer wird, je kleiner die Differenz zwischen dem aktuellen Einstellwert und einem Eckwert ist. Mit Vorteil ist die Taktfrequenz des elektrischen Signals gleich Null, wenn der aktuelle Einstellwert und ein Eckwert genau übereinstimmen. Der elektroakustische Wandler gibt dann einen konstanten Ton ab.

Diese Lösung ermöglicht es dem Anwender, mittels des Taktes des akustischen Signals die Position des Verstellelementes und damit die aktuelle Einstellung eines Parameters in Bezug auf die Eckwerte zu erkennen. Durch die Abgabe eines konstanten Tonsignals bei Übereinstimmung des aktuellen Einstellwertes mit einem Eckwert kann genau festgestellt werden, wenn ein Eckwert angefahren ist.

In einer weiteren vorteilhaften Ausgestaltung des erfindungsgemäßen Bedienelementes ist das Tonerzeugungselement mit einer Fangfunktion versehen, die die Differenz zwischen dem aktuellen Einstellwert und den Eckwerten ermittelt und für den Fall, daß die ermittelte Differenz unter einem vorgegebenen Schwellenwert liegt, den entsprechenden Eckwert einstellt. Eine derartige Fangfunktion ermöglicht das schnelle Einstellen eines Eckwertes, ohne daß dieser mit dem Verstellelement feinfühlig angefahren werden muß.

Mit Vorteil weist das Bedienelement eine digitale Anzeige für den aktuellen Einstellwert auf. Dadurch kann für den Fall, daß auf das akustische Signal verzichtet wird, der aktuelle Einstellwert eines Parameters mit hoher Genauigkeit an der digitalen Anzeige abgelesen werden.

Weitere vorteilhafte Weiterbildungen des erfindungsgemäßen Bedienelementes sind in den verbleibenden Unteransprüchen gekennzeichnet.

Die Erfindung soll nachfolgend unter Bezugnahme auf die Zeichnungen an mehreren Ausführungsbeispielen näher erläutert werden.

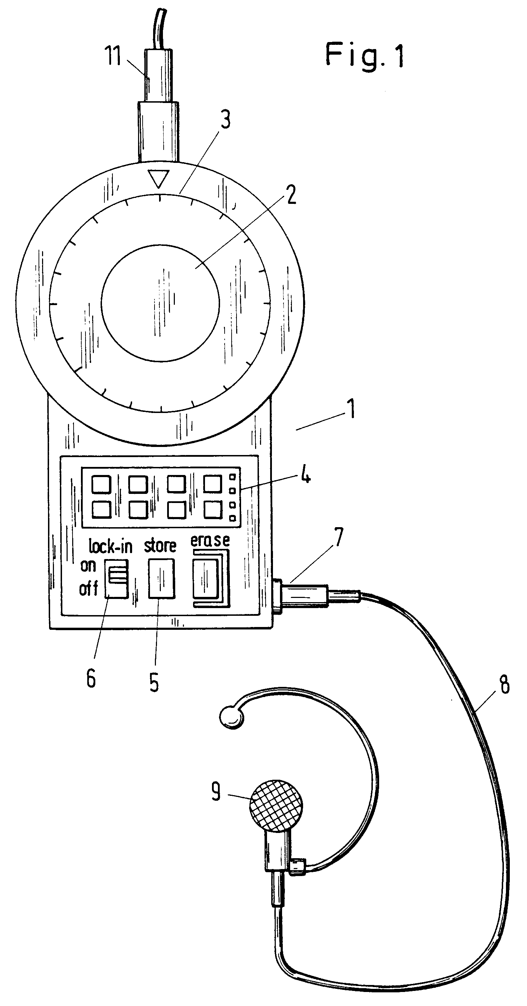

Es zeigen
- Figur 1: eine schematische Darufsicht auf ein erfindungsgemäßes Bedienelement und
- Figur 2: ein Blockschaltbild eines Tonerzeugungselementes.

Das Bedienelement 1 besteht aus einem als Verstellelement dienenden Handrad 2, einer am Handrad 2 angeordneten Skalenscheibe 3, einer digitalen Anzeige 4 zur Anzeige der aktuellen Einstellwerte des Handrads 2, einer Eckwerteingabe 5, einem Bedienungselement 6 zum Zu- bzw. Abschalten einer Fangfunktion und einem Ausgang 7 für den Anschluß elektroakustischen Wandler. Über ein Kabel 8 ist ein Kopfhörer 9 mit dem Ausgang 7 des Bedienelementes 1 verbunden.

Weiter ist das Bedienelement 1 über einen Anschluß 11 mit einer Einheit zum Einstellen eines photographischen Parameters verbunden. Eine derartige Einstelleinheit ist beispielsweise eine am Kameraobjektiv angeordnete Motoreinheit, die ein Drehmoment auf den Zahnkranz eines Objektivringes überträgt und auf diese Weise entsprechend den am Bedienelement eingestellten Werten eine Einstellung des Objektivringes bewirkt. Durch entsprechende Motoreinheiten können die Irisblendenöffnung, die Schärfe und die Brennweite eingestellt werden.

In einer alternativen Ausführungsform werden die Signale des Bedienelementes 1 dem Kamerakontrollgerät oder einer anderen Kontrolleinheit zugeführt und von dort an eine Einstelleinheit weitergeleitet.

Die Einstellwerte eines Parameters werden am Handrad 2 eingestellt. Anhand der Skalenscheiben 3 können der aktuelle Einstellwert und die Verstellung des Parameters verfolgt werden. Die Skalenscheiben 3 sind dabei abnehmbar, so daß sie bei veränderter Kalibrierung durch andere Skalenscheiben 3 ersetzt werden können.

Der aktuelle Einstellwert ist mit hoher Genauigkeit über die digitale Anzeige 4 ablesbar.

Über die Eckwerteingabe 5 können mehrere Eckwerte der Verstellung eingegeben werden, insbesondere der Anfangs- und der Endwert. Dazu werden mit dem Handrad 2 die entsprechenden Werte angefahren und durch Betätigen der Eckwerteingabe 5 abgespeichert. In einem anderen Ausführungsbeispiel ist zusätzlich die Möglichkeit vorgesehen, die Eckwerte der Verstellung über eine Tastatur direkt einzugeben.

In Abhängigkeit von der Differenz zwischen dem am Handrad 2 eingestellten aktuellen Einstellwert und den Eckwerten der Verstellung wird von einem im Bedienelement 1 integrierten Tonerzeugungselement 12 ein elektrische Signal erzeugt und über den Ausgang 7 an den Kopfhörer 9 geleitet. Das elektrische Signal weist einen Takt auf, der umso langsamer ist, je kleiner die Differenz zwischen dem aktuellen Einstellwert und einem Eckwert ist. Bei genauer Übereinstimmung zwischen dem aktuellen Einstellwert und einem Eckwert ist der Takt gleich Null, so daß ein nicht unterbrochenes Signal an den Kopfhörer 9 abgegeben wird.

Das elektrische Signal wird im Kopfhörer 9 in ein akustisches Signal umgewandelt. Über den Takt des akustischen Signals ist die Position des Handrades 2 und damit der aktuelle Einstellwert relativ zu den Eckwerten feststellbar. Je näher der aktuelle Einstellwert einem Eckwert ist, desto langsamer ist der Takt des akustischen Signals. Bei Übereinstimmung der Werte wird vom Kopfhörer 9 ein konstanter Ton abgegeben.

Weiter ist am Bedienelement 1 eine über das Bedienungselement 6 wahlweise aktivierbare Fangfunktion vorgesehen: sobald die Differenz zwischen dem aktuellen Einstellwert und einem Eckwert einen vorgebenen Schwellenwert unterschreitet, wird der Eckwert eingestellt.

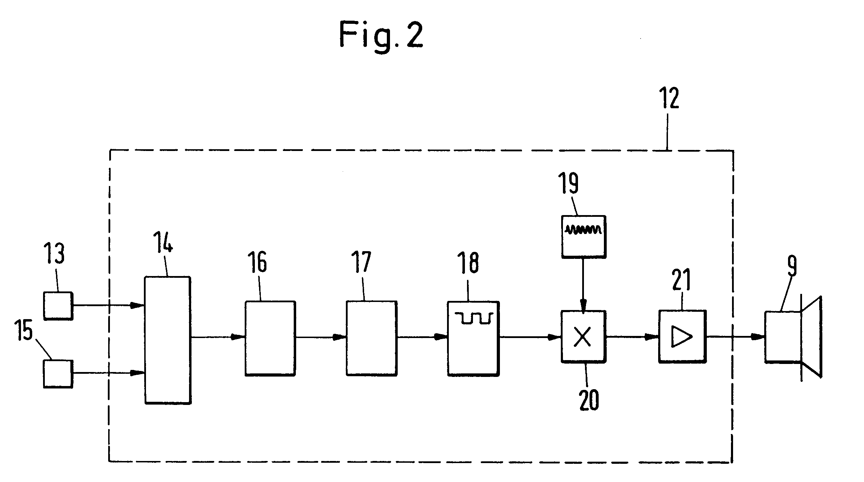

Figur 2 zeigt ein Blockschaltbild eines Tonerzeugungselementes 12. Die über die Eckwerteingabe 5 eingegebenen Eckwerte der Verstellung werden in einen Speicher 13 eingelesen und von dort einem Vergleichselement 14 zugeführt. Gleichzeitig wird das Vergleichselement 14 mit den Istwerten der aktuellen Handradeinstellung beaufschlagt. Dazu ist das Handrad 2 mit einem Handradwinkelgeber, vorzugsweise einem Potentiometer 15 verbunden, der ein der Stellung des Handrades 2 entsprechendes Signal an das Vergleichselement 14 abgibt.

Der Istwert der Handradeinstellung wird des weiteren der digitalen Anzeige 4 zugeführt sowie über den Anschluß 11 an eine Kontrolleinheit und/oder eine Motoreinheit abgegeben. Diese Einheiten sind in Figur 4 nicht dargestellt.

Im Vergleichselement 15 wird die Differenz zwischen dem Istwert der Handradeinstellung und den Eckwerten gebildet. In dem hinter dem Vergleichselement 15 angeordneten Logikelement 16 wird der dem Istwert nächste Eckwert ausgewählt. Dazu wird beispielsweise die kleinste im Vergleichselement 15 ermittelte Differenz ermittelt.

Mit dem Logikelement 16 ist ein weiteres Logikelement 17 verbunden, in welchem die Differenz zwischen dem Istwert und dem dem Istwert nächsten Eckwert mit einem vorgegebenen Schwellenwert verglichen wird. Ist die Differenz kleiner als der Schwellenwert, so wird am Ausgang des Logikelemenetes 17 als Istwert der im Logikelement 16 ermittelte Eckwert ausgegeben, anderenfalls der Istwert der Handradeinstellung.

Ein mit dem Ausgang des Logikelementes 17 verbundener Taktgeber, bevorzugt ein Oszillator 18, erzeugt einen zur Differenz zwischen dem Istwert und dem im Logikelement 16 ermittelten Eckwert proportionalen Takt. Für den Fall, daß die beiden Werte übereinstimmen, ist die Taktfrequenz gleich Null.

In einem Multiplikator 20 wird das Signal des Taktgebers 18, welches im wesentlichen durch ein Rechtecksignal mit Funktionswerten von "1" und "0" gegeben ist, mit dem Signal eines Tongenerator 19 multipliziert. Für die Werte "O" des Rechtecksignals ist das vom Multiplikator 20 abgegebene Signal dabei gleich Null, d.h. zeitlich unterbrochen. Am Ausgang des Multiplikators 20 entsteht somit ein getaktetes Signal. Dieses Signal wird im Verstärker 21 verstärkt und an den Kopfhörer 9 übertragen.

Gegebenenfalls sind einige oder alle der in Figur 2 beschriebenen Elemente des Tonerzeugungselementes 12 in einen Mikroprozessor integriert.

In einem anderen Ausführungsbeispiel ist der Oszillator 18 durch einen Impulsgeber ersetzt. Dann besteht das akustische Signal aus einer Folge pulsartiger Töne, deren Wiederholrate entsprechend der Differenz zwischen dem Istwert der Handradeinstellung und den Eckwerten variiert.

In weiteren Ausführungsbeispielen wird die Frequenz oder die Amplitude des dem akustischen Signal zu Grunde liegenden elektrischen Signals moduliert.

Die Erfindung beschränkt sich in ihrer Ausführung nicht auf die vorstehend angegebenen bevorzugten Ausführungsbeispiele. Vielmehr ist eine Vielzahl von Varianten denkbar, welche von dem erfindungsgemäßen Bedienelement auch bei grundsätzlich anders gearteten Ausführungen Gebrauch machen.

## Patentansprüche

1. Bedienelement für Kameras zur Einstellung photographischer Parameter mit einem Verstellelement,
**dadurch gekennzeichnet,**
daß in das Bedienelement (1) eine Eckwerteingabe (5) zur Eingabe von Eckwerten einer Verstellung und ein Tonerzeugungselement (12) integriert sind, wobei das Tonerzeugungselement (12) in Abhängigkeit von der Differenz zwischen dem aktuellen Einstellwert des Verstellelementes (2) und den eingestellten Eckwerten ein elektrisches Signal erzeugt, das einem mit dem Bedienelement (1) verbindbaren elektroakustischen Wandler (9) zuführbar ist.

2. Bedienelement nach Anspruch 1, **dadurch gekennzeichnet,** daß das vom Tonerzeugungselement (12) erzeugte elektrische Signal mit einer Frequenz getaktet ist, die mit zunehmender Übereinstimmung zwischen dem aktuellen Einstellwert und dem dieser Einstellung nächsten Eckwert abnimmt.

3. Bedienelement nach Anspruch 2, **dadurch gekennzeichnet,** daß die Taktfrequenz des vom Tonerzeugungselement (12) erzeugten elektrischen Signals bei Übereinstimmung zwischen dem aktuellen Einstellwert und einem Eckwert Null ist.

4. Bedienelement nach mindestens einem der vorangehenden Ansprüche, **dadurch gekennzeichnet**, daß das Tonerzeugungselement (12) mit einer Fangfunktion versehen ist, die die Differenz zwischen dem aktuellen Einstellwert und den Eckwerten ermittelt und für den Fall, daß die ermittelte Differenz unter einem vorgegebenen Schwellenwert liegt, den Eckwert einstellt.

5. Bedienelement nach mindestens einem der Ansprüche 1 bis 3, **dadurch gekennzeichnet**, daß das Tonerzeugungselement (12)
a) ein Vergleichselement (14) zur Bildung der Differenz zwischen dem aktuellen Einstellwert und den Eckwerten,
b) ein Logikelement (16), mit dem der jeweils nächste Eckwert ausgewählt wird,
c) einen Taktgeber (18), der einen zur Differenz zwischen dem aktuellen Einstellwert und dem dem aktuellen Einstellwert nächsten Eckwert proportionalen Takt erzeugt und
d) einen Tongenerator (19)
aufweist.

6. Bedienelement nach Anspruch 4 und 5, **dadurch gekennzeichnet**, daß das Tonerzeugungselement (12) zusätzlich ein Logikelement (17) aufweist, das für den Fall, daß die Differenz zwischen dem aktuellen Einstellwert und einem Eckwert einen vorgegebenen Schwellenwert unterschreitet, den Eckwert weitergibt.

7. Bedienelement nach mindestens einem der vorangehenden Ansprüche, **dadurch gekennzeichnet**, daß das Bedienelement (12) eine digitale Anzeige (4) für den aktuellen Einstellwert aufweist.

8. Bedienelement nach mindestens einem der vorangehenden Ansprüche, **dadurch gekennzeichnet**, daß das Bedienelement (12) eine analoge Anzeigeskala (3) für das Verstellelement (2) aufweist.

9. Bedienelement nach mindestens einem der vorangehenden Ansprüche, **dadurch gekennzeichnet**, daß der elekroakustische Wandler (9) in das Bedienelement (1) integriert ist.
